# EUROPÄISCHE PATENTSCHRIFT

(11) **EP 2 539 257 B1**
(45) Veröffentlichungstag und Bekanntmachung des Hinweises auf die Patenterteilung: **30.07.2014**
(21) Anmeldenummer: 11706750.4
(22) Anmeldetag: 22.02.2011
(51) Int. Cl.: B65G 69/20, A23L 3/3409, B65D 88/74

(54) **VERFAHREN ZUM LÜFTEN VON MIT SCHADGASEN KONTAMINIERTEN WAREN, LÜFTUNGSSCHLEUSE UND LÜFTUNGSSCHLEUSENANLAGE**
METHOD FOR AERATING GOODS CONTAMINATED WITH HARMFUL GASES, AERATION SLUICE, AND AERATION SLUICE SYSTEM
PROCÉDÉ D'AÉRATION DE MARCHANDISES CONTAMINÉES PAR DES GAZ NOCIFS, SAS D'AÉRATION ET INSTALLATION À SAS D'AÉRATION

(30) Priorität: 26.02.2010 DE 102010009598
(43) Veröffentlichungstag der Anmeldung: 02.01.2013
(73) Patentinhaber: Hertel, Frank, 04316 Leipzig (DE)
(72) Erfinder: Hertel, Frank, 04316 Leipzig (DE)
(74) Vertreter: Müller, Volkmar
(86) Internationale Anmeldenummer: PCT/EP2011/000830
(87) Internationale Veröffentlichungsnummer: WO 2011/103996

(56) Entgegenhaltungen:
- EP-A1- 1 179 978
- WO-A1-2006/116809
- US-A1- 2007 163 435
- US-A1- 2008 251 514

## Beschreibung

Schleusen werden beispielsweise als Übergabestelle von Waren (Warenschleuse) vom Spediteur an den Kunden verwendet und sind in unterschiedlicher Art und Weise bekannt. Eine mögliche Unterscheidung ist bezüglich ihrer Mobilität gegeben, so unterscheidet man zwischen ortsfesten und ortsveränderlichen, ggf. auch mobilen Schleusen.

Ortsveränderliche Schleusen können im Bedarfsfall zum jeweiligen Bestimmungsort transportiert bzw. umgesetzt werden. Aus diesem Grund ist es zweckmäßig, dass diese Schleusen mit üblichen Transportmitteln transportiert werden können und ihre Form und Dimensionierung einen solchen Transport ermöglichen.

Eine kastenförmige Grundform, insbesondere in verschließbarer Bauart, ist anzutreffen.

Mit importierter ware beladene Container, d. h. insbesondere in einer verschließbaren Bauweise, sind zu einem Anteil von ca. 20% mit erheblichen gasförmigen Schadstoffkonzentrationen im Innenraum und damit beim Begehen des Containers durch Personen in der Atemluft belastet.

Waren im Sinne der Erfindung sind primär Stückgüter aller Art, insbesondere solche, die in Kartons oder Säcken verpackt und somit stapelbar sind, aber auch unverpackte, sowie verpackte Schüttgüter; sekundär unverpackte Schüttgüter und in Behältern befindliche Flüssigkeiten.

Dabei handelt es sich nicht nur um Gefahrgut im eigentlichen Sinne, sondern auch um Ladungsinhalte aller Art, d. h. insbesondere Waren, deren Verpackung oder deren Teile, die zum Teil
- zum Schutz vor Schädlingen diesbezüglich bewusst begast wurden,
- verursacht durch ihren Herstellungsprozess oder ihre Stoffzusammensetzung nachgasen oder
- vor dem Transport zur Reduzierung von Schimmelbefall speziell behandelt wurden.

Hierbei handelt es sich in Art und Form um diesbezüglich bekannte Schadstoffe, die entweder unter den im Container herrschenden Bedingungen gasförmig sind, oder um andere Stoffe, z.B. Flüssigkeiten, die aufgrund ihres Dampfdrucks zeitweilig gasförmig vorkommen. Schadstoffe in diesem Sinne sind beispielsweise:
Chlorpikrin/ Trichlor-nitro-methan, cis- und trans-1,2-Dichlotethen, Dichlormethan, Ethylbenzol, Schwefelkohlenstoff, Toluol, Trimethylbenzol mit allen Isomeren, Xylol mit allen Isomeren, Phosphorwasserstoff, Sulfuryldiflourid, Benzol, Trichlorethylen, 1,2-Dichlorethan, 1,3-Dichlorpropen mit Isomeren, Formaldehyd, 1,2-Dichlorpropan, Brommethan, Dibromethan, und Jodmethan.

Diese Schadstoffe sowie deren gasförmigen Komponenten (Schadgase) sind insbesondere beim manuellen Entladen, welches oft bei importierten Containern üblich ist, Öffnen oder Begehen der Container in der Atemluft oder unmittelbaren Umgebung, beispielsweise im Türbereich des Containers, für Personen gefährlich bzw. gesundheitsschädigend. Alle damit diesbezüglich in Kontakt kommenden Personen, insbesondere beim Arbeiten in einem Container mit solchen Schadgasen, sollten oder müssen geschützt werden. Diese Personen müssen wirksam vor dieses Schadgasen geschützt werden.

Messungen der Containerluft, d. h. der jeweiligen Schadstoffkonzentrationen, geben über eine eventuelle Gefahr bezüglich Schadgasen in üblicher Art und Weise Auskunft.
Um mit den aus den Containern stammenden kontaminierten Waren, bei denen eine relevante Schadstoffkonzentrationen detektiert wurde, gefahrlos umgehen zu können, z.B. Ausladen. Lagern und Inverkehrbringen, ist es oft erforderlich, diese zuvor zu entgasen.
Unter Entgasen versteht man insbesondere ausreichend zu lüften, um die Konzentration der Schadgase im Container auf ein für das Personal unschädliche Maß zu senken.
Dies ist insbesondere notwendig bei einer solchen Art der Ladung, welche nur primär manuell entladen werden kann, da technisch nicht anders möglich. Dies ist beispielsweise bei Containern der Fall, insbesondere Importcontainern, bei welchen die Ware, beispielsweise eingestapelte Kartons, nicht auf Transportpaletten stehen, d. h. die Ware nicht mit üblichen technischen Entladehilfen, wie Gabelstaplem oder dgl., entladen werden können.

Unter Lüften wird im Sinne der Erfindung insbesondere Verstanden, dass in einem definierten Raum, welcher hin zur Umgebung teilweise nicht verschlossen ist, ein Druckunterschied besteht und/oder erzeugt wird, so dass dort eine Strömung anzutreffen ist. Diese führt dazu, dass sich die Gas-Luft-Gemische in diesem Raum(Containerluft) und Luft aus dessen Umgebung vermischen. Wird beispielsweise Frischluft in einen solchen Raum eingetragen verdrängt diese regelmäßig das im Raum befindliche Schadgas-Luft-Gemisch, so dass dies zu einer Konzentrationsabnahme des Schadgases im Gas-Luft-Gemisch im Raum führt.

Eine typische Situation bei Waren aus Importcontainern ist, dass die Waren durch die lange Aufenthaltsdauer während des Transports vollkommen durchgegast sind. Das heißt, die gasförmigen Schadstoffe (Schadgase) sind nicht nur im unbeladenen Teil des Containers anzutreffen, sondern haben sich in der Ware und/oder in deren Verpackung verteilt.
Im geschlossenen Container ist regelmäßig keine oder nur eine sehr geringe Strömung (Luftbewegung), insbesondere verursacht durch unterschiedliche Temperaturen und kleine Öffnungen, wie Ritze und Spalten, anzutreffen. Solche Container sind verschlossen, jedoch oft nicht luftdicht verschlossen.
Werden diese Waren ausgeladen, d. h. erstmals von Außenluft umspült, kommt es zur spontanen Freisetzung (Ausgasen) von Schadstoffen aus der Ware und/oder deren Verpackung in den unbeladenen Teil des Containers. Diese gasförmigen Schadstoffe (Schadgase) können somit auch in die Atemluft gelangen. Abhängig von der Art und der Konzentration des ausgasenden Stoffs, der Art und der Verpackung der Waren und den jeweiligen örtlichen Faktoren (Umweltbedingungen) kann der Prozess des Ausgasens sehr lange, d. h. auch bis zu mehreren Tagen, andauern und ein zügiges Entladen des Containers ist ohne die Verwendung von Schutzausrüstung gegen diese Schadgase, insbesondere beim manuellen Entladen, nicht möglich.
Zudem birgt ein weiteres unkontrolliertes Nachgasen, also eine weitere Schadstoffabgabe nach bereits erfolgter erstmaliger Lüftung, erneut Gefahren für den weiteren Umgang mit der Ware und/oder in deren Verpackung. In diesen Fällen müssen die Waren vor der weiteren Verwendung, d. h. dem erneuten Kontakt mit Personen, beispielsweise bei der Zwischenlagerung beim Großhändler oder der Abgabe an Endkunden, erneut entgast werden.

Dazu sind diesbezügliche Bedingungen zu verbessern oder zu schaffen, die es den Schadstoffen ermöglichen, aus den Waren und/oder deren Verpackung auszutreten und als Schadgase in die umgebende Luft zu gelangen. Das heißt, die Waren werden beispielsweise vereinzelt aufgestellt oder ganz oder teilweise ausgepackt, sodass die Schadstoffe durch eine möglichst große Oberfläche abgegeben werden können. Anschließend werden die Schadstoffe mit dem Luftstrom aus dem Raum abtransportiert und, so erforderlich, in üblicher Art und Weise weiter behandelt.

Die Waren gelten im Sinne der Erfindung als "ausreichend gelüftet", wenn nach dem Lüften, keine Gefahr für Personen durch abgegebene gasförmige Schadstoffe (Schadgase) mehr von ihnen ausgeht.
Dieser Zustand einer "ausreichenden Lüftung" kann in üblichen Gefährdungsbeurteilungen, die auf Messdaten der jeweiligen Schadstoffkonzentration basieren, bestimmt werden. Die Ware ist im Zustand einer "ausreichenden Lüftung" nicht mehr mit gasförmigen Schadstoffen (Schadgase) kontaminiert oder unterschreitet einen definierten Grenzwert der Schadstoffkonzentration, welcher beispielsweise durch Gesundheitsbehörden oder dgl. bestimmt werden können.

In der Praxis hat sich derzeit und seit vielen Jahren folgende Verfahrensweise (Stand der Technik) durchgesetzt:
1. Der importierte Container, welcher die belasteten Waren enthält, wird, beispielsweise von der Zollstelle, zum Lüftungsort (Entgasungsort), weicher oft nicht der Ort des Empfängers der Ware ist, transportiert. Damit ist regelmäßig ein zusätzlicher Transport zum Lüftungsort erforderlich, so dass zusätzliche Kosten für den Transport und die Anmietung des Ortes der Lüftung (Lüftungsort) notwendig sind.
2. Die Waren werden am Lüftungsort kontrolliert Entladen (Kontrollmessungen, Arbeitsschutz) und an einem lüftungsfähigen Ort aufgestellt, zumeist in einer Lagerhalle oder ähnlichen Lagerplätzen. Die oft vereinzelt aufgestellten Waren, um ein verbessertes Lüften zu ermöglichen, lüften oft ohne Fremdbelüftung, so dass das Lüften relativ viel Zeit, d. h. ggf. mehrere Tage, beansprucht. Wird ein Nachgasen erwartet, wird vorsorglich die Lüftungsdauer verlängert.
3. Nach ausreichender Lüftung werden die Waren umgeladen und verladen und dem Empfänger zugestellt. Das Messen der verbliebenen gasförmigen Schadstoffe bzw. deren Konzentration ist mit relativ großen Unsicherheiten (Messtoleranzen) behaftet, da insbesondere die Messung in großen Räumen, wie Lagerhallen, erfolgt, so dass in üblicher Art und Weise Messtoleranzen zu berücksichtigen sind.
   Alternativ findet vorsorglich ein längeres Lüften als eigentlich erforderlich statt, so dass ein entsprechender Zeitverlust hingenommen wird. Ein eventuelles Nachgasen kann dabei nur schätzungsweise einbezogen werden. Außerdem müssen die Waren oftmals wieder eng zusammengeschichtet werden, damit sie sicher zum Empfänger transportiert werden können. Die ausreichende Lüftung wird mittels Messung somit vor der Verladung festgestellt (ohne festgelegte Standards).
4. Dabei kann durch ein Nachgasen der Waren erneut die Gefahr entstehen, dass bei der Entladung am Empfangsort, d. h. beim Empfänger, hohe Konzentrationen von Schadgasen die Atemluft belasten können. Diesem Effekt kann nur mittels zusätzlicher ausreichender Lüftung, z.B. Entladung mit geöffneten Planen oder zusätzlichem Gebläse bei geschlossenen Fahrzeugen, entgegengewirkt werden.

Wesentlich ist, dass durch das erfindungsgemäße Verfahren insbesondere verhindet wird, dass Schadgase in die Atemluft von Personen gelangen. Dies wird insbesondere dadurch erreich, dass beim manuellen Kontakt mit der Ware eine solche Strömung besteht, die noch vorhandenes Schadgas von der Person weg leitet, so dass diese nicht in die Atemluft gelangen kann.
Es ist damit ermöglicht, dass beim Entladen der Lüftungsschleuse keine zusätzlichen Schutzmaßnahmen, wie Atemmasken, erforderlich sind.

Das erfindungsgemäße Lüften in der erfindungsgemäßen Lüftungsschleuse ist besonders effektiv bei Waren, welche den Grenzwert bezüglich Schadgasen nur leicht überschreitet, d. h. ein Überschreiten von bis ca. 100%. Da in diesen Fällen ein nur vergleichswelse kurzes Lüften, beispielsweise 4 bis 8 Stunden, erfolgen muss, sodass dies direkt beim Empfänger der Ware in der Lüftungsschleuse erfolgen kann.
Alternativ können dies auch Waren sein, welche ursprünglich den Grenzwert bezüglich Schadgasen stark überschritten hatten, d. h, ein Überschreiten von über ca. 100%, welche zuvor außerhalb einer Lüftungsschleuse gelüftet wurden und anschließend in die Lüftungsschleuse zum erfindungsgemäßen Lüften verbracht wurden.

Die vorliegende Erfindung bewirkt insbesondere eine Vereinfachung und Beschleunigung des Verfahrens zum Lüften/ Entgasen und bietet mehr Sicherheit am Arbeitsplatz. Dies wird insbesondere folgendermaßen erreicht:
1. Kontrollierte Entladung, insbesondere aus einem Import-Container, in die mobile Lüftungsschleuse, dabei bevorzugt bei laufender Luftabsaugung entgegen der Zutrittsrichtung des Ladepersonals. Dadurch wird die Schadgaskonzentratlon bereits während des Umladens reduziert. Es entfällt der zusätzliche Transport, d. h. der An- und Abtransport, der Waren zum bisher üblichen Lüftungsort. Die Lüftung beginnt bevorzugt sofort mit dem Beladen der Lüftungsschleuse.
2. Waren lüften in der Lüftungsschleuse unter kontrollierten Bedingungen. Es kann die Luftwechselrate bestimmt und gezielt verändert werden. Es sind genauere Konzentrationsmessungen in der Abluft ermöglicht. Es kann außerdem das Nachgasungsverhalten der Waren bei ausgeschalteter Lüftung und verschlossenen Lüftungsöffnungen, beispielsweise können mehrere Vergleichsmessungen in einer solchen Phase ohne Lüftung in der Lüftungsschleuse erfolgen, bestimmt werden. Damit ist eine sehr genaue Gefährdungsanalyse für die nachfolgenden Behandlungsschritte der Waren, insbesondere bezüglich eines eventuellen Nachgasens, ermöglicht. Ein erneutes Beladen und die damit verbundenen Gefährdungen für die beteiligten Personen, insbesondere das Verladepersonal, sowie die damit verbundenen Kosten entfallen bzw. können auf den tatsächlich notwendigen Aufwand reduziert werden.
3. Nach ausreichender Lüftung in der Lüftungsschleuse kann der Empfänger frei über die Ware bestimmen. Die Waren werden immer bei laufender Luftabsaugung entgegen der Zutrittsrichtung entladen. Dadurch ist dabei gewährleistet, dass nachgasende Schadstoffe primär vom Arbeitsplatz weg transportiert werden; eine zusätzliche Maßnahme zur Erhöhung der Sicherheit ist erreicht.

Die Erfindung betrifft einen verschließbaren Raum, welcher grundsätzlich jede übliche Form von Warenschleusen haben kann. Die Erfindung ist grundsätzlich nicht auf derzeit bekannte Warenschleusen, wie beispielsweise Schleusen mit einem Grundkörper in Form eines Containern gemäß internationaler Standards (beispielsweise gemäß DIN ISO 668 und 830 oder ISO 1496), beschränkt.

Eine Fördereinrichtung ist im Sinne der Erfindung eine saugende Einheit, so diese zumindest ein Luft-Gas-Gemisch aus dem Innenraum der Lüftungsschleuse absaugt.
Als eine solche saugende Einheit sind beispielsweise Radialgebläse oder Niederdruck- oder Mitteldruckventilatoren einsetzbar.

Wirkungsprinzip der Lüftungsschleuse/des verschließbaren Raums, ggf. eines luftdicht verschließbaren Raums:

Die schadstoffbelasteten Waren werden in der Lüftungsschleuse derart eingebracht, dass möglichst viel der schadstoffabgebenden Fläche von Luft umströmt werden kann.
Ein Luftstrom transportiert die gasförmigen Schadstoffe in Richtung des Entlüftungspunktes der Lüftungsschleuse ab.
Nach einer ausreichender Lüftung - im Sinne der Erfindung - können die Waren aus der Luftungsschleuse entnommen werden.
Die Lüftung ist bevorzugt bei allen Arbeitsschritten, außer bei bestimmten Messungen der Schadstoffkonzentration, eingeschaltet.
Bei allen Arbeitsschritten wird das schadstoffbelastete Gas-Luft-Gemisch weg vom Arbeitsplatz des Ladepersonals, insbesondere hin zum Entlüftungspunkt transportiert.

Soll beispielsweise die aktuelle Ausgasungsrate ermittelt werden, so kann im Abluftstrom (vor einem eventuell vorhandenem Filter) oder nach einer definierten Zeit bei abgestellter Lüftung und geschlossenen Luftein- und Auslässen im Innenraum, bevorzugt an definierten Messstellen, gemessen werden.

Das erfindungsgemäße Verfahren wird nachfolgend beispielsweise durch folgende

Verfahrensschritte beschrieben:
- Die Lüftungsschleuse wird bei eingeschalteter Belüftung insbesondere manuell beladen,
- Die Beladeöffnung oder die Türen der Schleuse werden verschlossen, Waren werden unter Verwendung einer Fördereinrichtung gelüftet (Fremdlüften)
- nach ausreichender Lüftung und Detektierung dieser ausreichenden Lüftung durch eine Messeinrichtung steht die Ware der Lüftungsschleuse für den Empfänger bereit;
- nach ausreichender Lüftung wird die Entladeöffnung der Lüftungsschleuse geöffnet,
- Entladen der Waren im Zustand einer ausreichenden Lüftung, wobei zumindest das im Innenraum der Lüftungsschleuse befindliche Luft-Gas-Gemisch über zumindest einen Entlüftungspunkt entweicht und das entweichende Luft-Gas-Gemisch primär in einer Richtung weg von der Entladeöffnung im Innenraum der Schleuse hin zum Entlüftungspunkt strömt.

Im Sinne der Erfindung kann der verschließbare Raum integraler Bestandteil einer Lüftungsschleuse auch mit mehr als zwei Türen sein, einer Wechselbrücke, eines LKW-Anhängers, eines LKW-Sattelanhänger oder eines Lkws mit Aufbau sein.

Im Sinne der Erfindung sind die Bezeichnung "Entlüftungspunkt", "Meßpunkt" oder "Ladepunkt" als 3-dimensionale Ortsangaben zu verstehen, die unterschiedliche Raumformen bezeichnen können.

Die Unteransprüche 2 bis 9 geben weitere vorteilhafte Ausgestaltungen der Erfindung gemäß Anspruch 1 wieder, ohne diese zu begrenzen.

Bevorzugt ist, dass der verschließbare Raum eine transportable Lüftungsschleuse ist, deren Grundkörper insbesondere ein ISO-Container, beispielsweise gemäß DIN ISO 668 und 830 oder ISO 1496, ist.

Bevorzugt ist außerdem, dass bei ausgeschaltetem Lüftungssystem und verschlossenen Lüftungsöffnungen des Luftelntrittssystem und des Luftaustrittssystem, d. h. die Lüftungsschleuse ist insbesondere luftdicht verschlossen, ein Entgasen der kontaminierten Ware zum Zwecke der Beobachtung eines Nachgasens erfolgt.

Bevorzugt ist außerdem, dass sich die Ablagepunkte der kontaminierten Waren im Innenraum zwischen der Entladeöffnung und zumindest einem Entlüftungspunkt befinden.

Bevorzugt ist außerdem, dass die Ware in der Lüftungsschleuse der Art angeordnet wird, so dass in Abhängigkeit von der Form der Ware oder deren Verpackung eine möglichst große Kontaktfläche mit dem Lüftungsstrom vorhanden ist.

Bevorzugt ist außerdem, dass das über das Luftaustrittssystem nach außen geleitete Luft-Gas-Gemisch in eine Reinigungs- und Filtereinheit eingeleitet wird. Damit ist in einfacher Art und Weise gesichert, dass Schadgase nicht unkontrolliert in die Umgebung des verschließbares Raumes gelangen. Außerdem ist damit die Möglichkeit eröffnet, das gereinigte und/oder gefilterte Gas-Luft-Gemisch wieder in den Lufteinlass einzuleiten.

Bevorzugt ist außerdem, dass der verschließbare Raum luftdicht verschließbar ist. Damit ist ermöglicht, dass aus der verschlossenen Lüftungsschleuse keine Schadgase unkontrolliert entweichen können. Wird zusätzlich das über das Luftaustrittssystem nach außen geleitete Luft-Gas-Gemiscli in eine Reinigungs- und Filtereinheit eingeleitet, ist ermöglicht, dass der Schadgaseintritt in die Umgebung der Lüftungsschleuse zumindest stark reduziert wird.

Die Aufgabe der Erfindung wird außerdem durch eine Verwendung einer ortsveränderlichen Lüftungsschleuse gemäß den Merkmalen des Anspruchs 10 gelöst,

Erfindungswesentlich ist, dass diese Lüftungsschleuse zumindest enthält:
- zumindest eine verschließbare Ladeöffnung,
- zumindest einen Entlüftungspunkt, wobei zumindest dieser eine Entluftungspunkt im Bereich gegenüber der Ladeöffnung angeordnet ist,
- zumindest einen Luftauslass und
zumindest eine Fördereinrichtung, die in Strömungsrichtung hinter dem Entlüftungspunkt angeordnet ist.

### Verwendung

Wesentliche Vorteile der erfindungsgemäßen Verwendung sind:
- einfach transportierbar, beispielsweise mit Lkw, Schiff, Transportflugzeuge und Eisenbahn,
- mit üblichen Krananlagen kranbar,
- geringe feste Kosten, z.B. keine Kfz-Steuer; wenig Platzbedarf,
- keine zusätzlich Qualifikation an Personal des Transportfahrzeugs, des Spediteurs und der Lkw-Fahrer,
- zu behandelnde Waren können an nahezu jeder mit Lkw befahrbaren Stelle, übernommen werden, Umfuhren und Zeitverlust werden vermieden,
- Anwendung auf dem Gelände des Empfängers, kein zusätzlicher Warentransport,
- die Nachgasungsrate der Ware kann genau ermittelt werden und
- der Gefährdung durch Nachgasen der Ware während des Entladevorgangs (nicht Luftumströmte Oberflächen, Blasebalgeffekt beim Anpacken der Güter, z.B. bei Kartons) wird mittels Lüftung und Abtransport der Schadgase aktiv entgegengewirkt.

In Aufbau und Auswahl seiner Komponenten ist die erfindungsgemäße Lüftungsschleuse überraschend einfach konzipiert und erfüllt dennoch die gestellte Aufgabe der Erfindung.

Eine Fördereinrichtung ist im Sinne der Erfindung eine saugende Einheit, so diese zumindest ein Luft-Gas-Gemisch aus dem Innenraum der Lüftungsschleuse absaugt.
Als eine solche saugende Einheit sind beispielsweise Radialgebläse oder Niederdruck- oder Mitteldruckventilatoren einsetzbar.

Die Unteranspruche 11 bis 15 geben weitere vorteilhafte Ausgestaltungen der Erfindung gemäß Anspruch 10 wieder, ohne diese zu begrenzen.

Bevorzugt ist, dass sich in der Wandung der Lüftungsschleuse zumindest ein Messpunkt angeordnet ist, welcher eine Probennahme im Innenraum ermöglicht.

Bevorzugt ist außerdem, dass weitere Entlüftungspunkte, insbesondere im Bereich der Ablagepunkt, angeordnet sind. Damit ist ermöglicht, dass auch beim Entladen über eine Ladeöffnung, welche nicht an einer Stirnseite angeordnet ist, erfindungsgemäß Gelüftet wird.

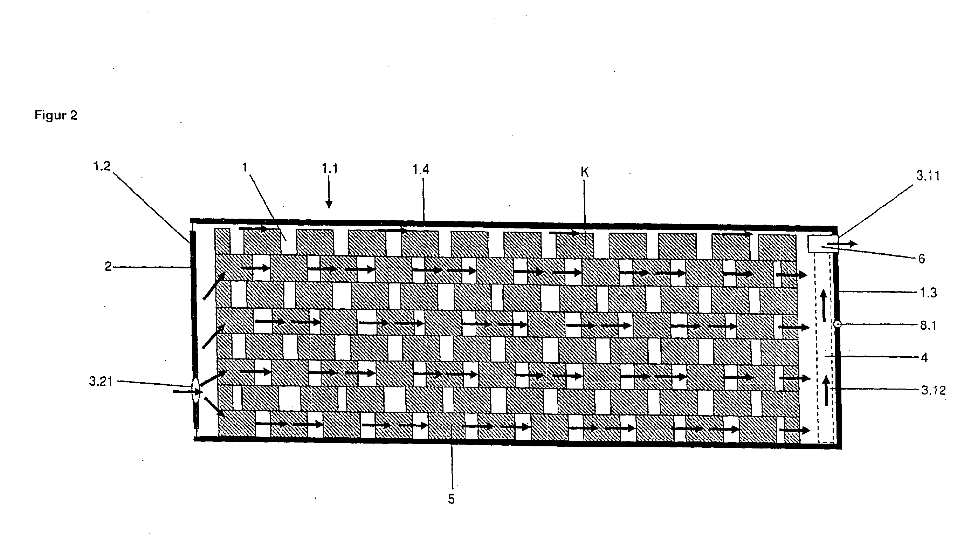

Sind diese weiteren Entlüftungspunkte nahe der Ladepunkte angeordnet, kann zumindest am jeweiligen Ladepunkt die Schadgaskonzentration schneller abgesenkt werden; eine kürzere Lüftungsdauer ist ermöglicht.
Sind zusätzlich dazu weitere Lufteinlässe vorhanden, beispielsweise wie in Figur 2 dargestellt, kann die Länge des Entlüftungsweges weiter reduziert werden.
Besonders bevorzugt ist diese Ausgestaltung in dem Fall, wo Waren entlüftet werden, welche eine erhöhte Empfindlichkeit gegen Feuchtigkeit, insbesondere eine erhöhte Luftfeuchtigkeit besitzen, wie beispielsweise elektrische Geräte, und vorgewärmte und/oder entfeuchtete Luft eingeleitet wird

Bevorzugt ist außerdem, dass die Fördereinrichtung eine saugende Einheit ist und innerhalb und außerhalb des Innenraums der Lüftungsschleuse anordenbar ist.

Damit ist auch ermöglicht, dass innerhalb einer Lüftungsschleusenanlage für mehrere Luftungsschleusen nur eine Fördereinheit für gasförmige Medien erforderlich Ist; grundsätzlich kann die Anzahl der Lüftungsschleusen kleiner sein als die Anzahl der Fördereinrlchtungen innerhalb einer Lüftungsschleusenanlage. Damit ist die Lüftungsschleusenanlage effektiver, d. h. insbesondere mit einem geringen Aufwand betreibbar.

Die Erfindung wird nachfolgend an Ausführungsbeispielen näher erläutert, ohne damit alle Elnsatzmöglichkelten der Erfindung abschließend dargestellt zu haben.

Die Figuren zeigen:
- Figur 1: eine erfindungsgemäße Lüftungsschleuse in einer Seitenansicht in Schnittdarstellung,
- Figur 2: eine erfindungsgemäße Luftungsschleuse in einer weiteren Seitenansicht in Schnittdarstellung,
- Figur 3: eine weitere Ausführungsform einer erfindungsgemäßen Lüftungsschleuse,
- Figur 4: eine weitere Ausführungsform einer erfindungsgemäßen Lüftungsschleuse 1.1 in einer schematischen Darstellung und in Draufsicht,
- Figur 5: eine erfindungsgemäße Lüftungsschleuse mit einer Querlüftung,
und
- Figur 6: eine erfindungsgemäße Lüftungsanlage, zumindest bestehend aus einer Lüftungsschleuse und einer Fördereinhelt für gasförmige Medien.

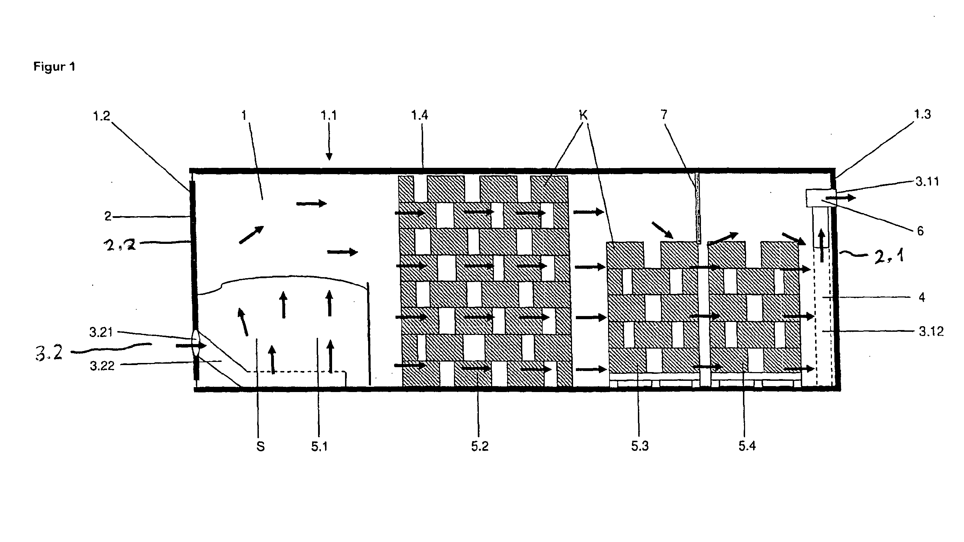

**Fig.1** zeigt eine Lüftungsschleuse 1.1 in einer Seitenansicht in Schnittdarstellung.
Die ortsveränderliche Lüftungsschleuse 1.1 besitzt eine geschlossene Bauweise, so dass ihr Innenraum einen verschließbaren Raum 1 bildet, der auch luftdicht verschließbar ausgeführt sein kann. Die Form und die Abmaße der Lüftungsschleuse entsprechen bevorzugt dem eines DIN-Standard-ISO -Containers (DIN-ISO 668). Damit ist gewährleistet, dass die Lüftungsschleuse 1.1 problemlos in das derzeit bestehende internationale Transportsystem integriert werden kann und insbesondere zu diesbezuglichen Containern kompatibel ist.
Zum Verschließen dienen zwei übliche verschließbare Ladeöffnungen 2, nämlich die Entladeöffnung 2.2 und Beladeöffnung 2.1, die in Fig. 1 an den beiden Stirnseiten 1. 2 und 1.3, der kastenförmigen Lüftungsschleuse 1.1 vertikal, in üblicher Art und Weise, angeordnet sind. Die die Entladeöffnung 2.2 und die Beladeöffnung 2.1 sind im geschlossenen Zustand dargestellt.
An der Stirnseite 1. 2 ist zumindest ein verschileßbarer Lufteinlass 3.21, der auch luftdicht verschließbarer sein kann, angeordnet.

Alternativ könnte zumindest eine der Ladeöffnungen 2, hier beispielsweise die Entladeöffnung 2.2, die Funktion des Lufteinlasses 3.21 mit übernehmen, so dass kein gesonderter Lufteinlass 3.21, d. h. Kein gesondertes diesbezügliches Bauteil, vorhanden sein müsste.

Der Lufteinlass 3.21 kann eine Verschlussklappe besitzen, so dass insbesondere Schutz vor eindringendem Spritzwasser während des Transports besteht.

Außerdem kann die Lüftungsschleuse 1.1 verschlossen werden, um deren Inhalt "schwitzen" zu lassen, d. h. Nachgasen zu lassen, um über Messungen u. a. die Schadgas- bzw. Schadstoffkonzentration der Waren ermitteln zu können.
Zur Messung der Schadstoffkonzentration in der Lüftungsschleuse 1.1, unter Nutzung einer diesbezüglich üblichen Messeinrichtung, die in Fig. 1 nicht dargestellt ist, können an unterschiedlichen Orten(Punkten) der Wandung der Lüftungsschieuse 1.1, d. h. insbesondere an den Stirn-, Decken- und/oder Längsseiten verschließbare Meßpunkte 8.1 angeordnet sein. Der Lufteinlass 3.21 und der Luftauslass 3.11 sind im geöffneten Zustand dargestellt.

Das entweichende Luft-Gas-Gemisch strömt im Innenraum des Raumes 1 primär in Richtung weg von der Entladeöffnung 2.2 hin zum Entlüftungspunkt 4 im Bereich der Stirnseite 1.3. Dabei gelangt Außenluft über den Lufteinlass 3.21 in den Innenraum der Luftungsschleuse 1.1, vermischt sich mit dem in der Lüftungsschleuse 1.1 befindlichen Luft-Gas-Gemisch, so dass die Konzentration des Schadgases in der Lüftungsschleuse 1.1 abgesenkt wird, und entweicht über den Luftauslass 3.11 aus der Lüftungsschleuse 1.1. Der Strömungsverlauf ist durch Pfeile und deren Richtung der Pfeilspitze in Fig. 1 gekennzeichnet.
In der Lüftungsschleuse 1.1 sind an den Ablagepunkten 5 die Waren, hier Kartons K, abgelegt.

Die durch den Lufteinlass 3.21 einströmende Außenluft wird durch den Stapel der auf Lücke gestapelten Kartons geleitet, so dass ein intensives Durchströmen dieser Lücken und damit der Flächen, an welchen Schadgase anzutreffen sind, erreichbar ist.
Am Ablagepunkt 5 reicht der Stapel von lose gestapelten Kartons K, d. h. auf Lücke aufgeschichtet, fast bis zur Containerdecke 1.4.

Der Entlüftungspunkt 4 ist in Fig. 1 in der Nähe der Stirnselte 1.3 und damit der zweiten Ladeöffnung 2 angeordnet. Der Entlüftungspunkt 4 kann dabei als ein perforiertes Luftsammelrohr 3.12 ausgebildet sein, welches am oberen Ende in den Luftauslass 3.11 und dieser in die Fördereinrichtung 6 mündet.

Die Lüftungsschleuse 1.1 besitzt zumindest einen Luftauslass 3.11 und zumindest eine in Art und Weise bekannte Fördereinrichtung 6, hier eine saugende Einheit, die In Strömungsrichtung somit hinter dem Entlüftungspunkt 4 und im Außenbereich der Wandung angeordnet ist.

Bei dieser in Fig. 1 dargestellten Ausführungsform erfolgt das Beladen durch manuelles Umladen aus einem Import-Container, insbesondere durch eine der beiden Ladeöffnungen 2, bevorzugt durch die Beladeöffnung 2.1. Im nächsten Verfahrensschritt werden die beiden Ladeöffnungen 2 geschlossen und das Lüftungssystem 3 eingeschalten, d. h. insbesondere die Fördereinrichtung 6 saugt das Schadgas-Luft-Gemisch aus dem Raum 1 ab. In Fig. 1 ist die Lüftungsschleuse 1.1 zum Zeitpunkt des Verfahrensschrittes "Lüften des Innenraums des Raumes 1" dargestellt.
Das Ausladen der auf Lücke gestapelten Kartons K erfolgt durch die Entladeöffnung 2.2, welche an der Stirnseite 1.2 angeordnet ist, so dass beim Entladen und bei geschlossener Beladeöffnung 2.1 das Absaugen erfolgt.

**Fig. 2** zeigt eine Lüftungsschleuse 1.1 in einer weiteren Seitenansicht in Schnittdarstellung während des Verfahrensschrittes "Lüften des Innenraums des Raumes 1", hier durch ein Querlüften.
Die dargestellte Lüftungsschleuse 1.1 entspricht grundsätzlich der Ausführung gemäß Fig. 1, wobei abweichend davon im Boden 1.6 ein Lufteintrittssystem 3.2 mit mehreren Lufteinlässen 3.21, in Fig. 2 sind drei davon erkennbar, die an unterschiedlichen Ablagepunkten 5 verteilt sein können, angeordnet ist. Die Luftauslässe 3.11, in Fig. 2 sind zwei davon erkennbar, die in dieser Ausführung den Entlüftungspunkten 4 entsprechen, sind in den beiden Längsseiten 1.5 der Lüftungsschleuse 1.1 angeordnet. Über die Lufteinlässe 3.21 kann vorgewärme und/oder entfeuchtete Luft eingeleitet werden, so dass eine Schädigung von feuchtigkeitsempfindlicher Ware verhindert werden kann.

Das erfindungsgemäße Lüften des Innenraums des Raumes 1 erfolgt durch eine Fördereinrichtung 6, die in Fig. 2 nicht dargestellt ist, die das im Innenraum des Raumes 1 befindliche Luft-Gas-Gemisch bewegt und dieses Luft-Gas-Gemisch über ein Luftaustrittssystem 3.1, in Fig. 2 sind zwei Luftauslässe 3.11 dargestellt, nach außen und Luft über ein Lufteintrittssystem 3.2 in den Innenraum des Raumes 1 leitet.
Der Strömungsverlauf ist durch Pfeile und die Richtung der Pfeilspitze, in Fig. 2, gekennzeichnet.

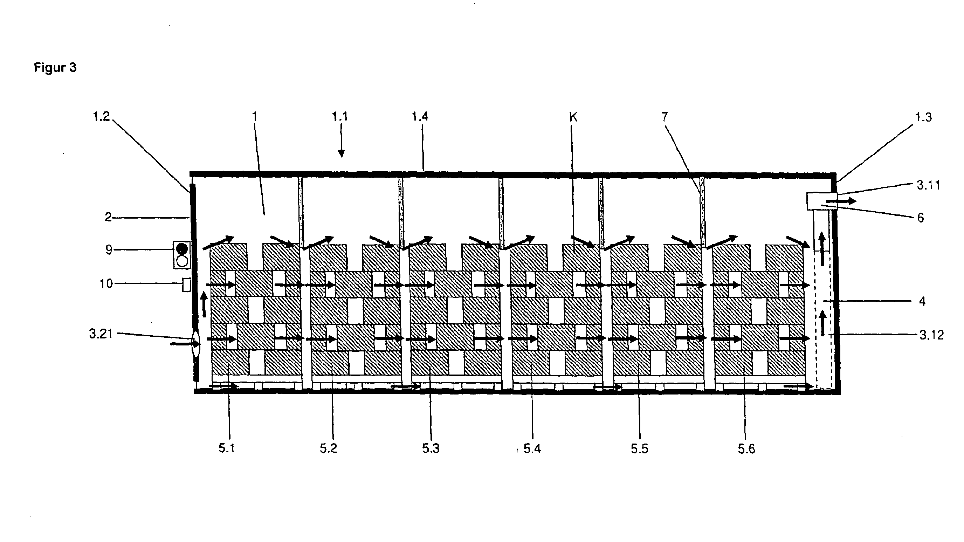

**Fig. 3** zeigt eine weitere Ausführungsform einer erfindungsgemäßen Lüftungsschleuse während des Verfahrensschrittes "Lüften des Innenraums des Raumes 1".
zum Verschließen der kastenförmigen Lüftungsschleuse 1.1 dienen zwei übliche verschließbare Ladeöffnungen 2. die in Fig. 3 an der Stirnseite 1. 2, dort als Ladeöffnung 2.2. und an der Stirnseite 1.3, dort als Ladeöffnung 2.1, vertikal in üblicher Art und Weise angeordnet sind. Die Entladeöffnung 2.2 und die Beladeöffnung 2.1 sind jeweils im geschlossenen Zustand dargestellt.
An der Decke 1.4, dort nahe der Stirnseite 1. 2, sind ein verschließbarer Lufteinlass 3.21 und nahe der Stirnseite 1. 3 ein Luftauslass 3.11 angeordnet.
Auf der Decke 1.4 der Lüftungsschleuse 1.1 ist eine Fördereinrichtung 6 befestigt, welche wahlweise durch die Lüftungsleitung 3.41 mit dem Lufteinlass 3.21 oder durch die Lüftungsleitung 3.42 mit dem Luftauslass 3.11 verbindbar ist.
Am Übergang der Lüftungsleitung 3.41 zum Lufteinlass 3.21 ist eine Lüftungsklappe 14.1 angeordnet, die zwei Schaltstellungen besitzt. In der ersten Schaltstellung der Lüftungsklappe 14.1 ist die Luftungsleitung 3.41 verschlossen und der Lufteinlass 3.21 geöffnet und in der zweiten Schaltstellung der Lüftungsklappe 14.1 ist die Lüftungsleitung 3.41 geöffnet und der Lufteinlass 3.21 verschlossen,
Am Übergang der Lüftungsleitung 3.42 zum Luftauslass 3.11 ist eine Lüftungsklappe 14.2 angeordnet, die zwei Schaltstellungen besitzt. In der ersten Schaltstellung der Lüftungsklappe 14.2 ist die Lüftungsleitung 3.42 verschlossen und der Luftauslass 3.11 geöffnet und in der zweiten Schaltstellung der Lüftungsklappe 14.2 ist die Lüftungsleitung 3.42 geöffnet und der Luftauslass 3.11 verschlossen.
Das entweichende Luft-Gas-Gemisch strömt im Innenraum des Raumes 1 primär in Richtung weg von der Ladeöffnung 2.2 hin zum Entlüftungspunkt 4 Dabei gelangt Außenluft über den Lufteiniass 3.21 in den Innentraum der Lüftungsschleuse 1.1, vermischt sich mit dem in der Lüftungsschleuse 1.1 befindlichen Luft-Schadgas-Gemisch, so dass die Konzentration des Schadgases in der Lüftungsschleuse 1.1 abgesenkt wird, und entweicht über den Luftauslass 3.11 aus der Lüftungsschleuse 1.1. Der Strömungsverlauf ist durch Pfeile und die Richtung der Pfellspitze in Fig. 3 gekennzeichnet.
In der Lüftungsschleuse 1.1 sind an den Ablagepunkten 5 die Waren, hier Kartons K, abgelegt. Der Entlüftungspunkt 4 kann als ein perforiertes Luftsammelrohr 3.12 ausgebildet sein, welches am oberen Ende in den Luftauslass 3.11 mündet.

Die durch den Lufteinlass 3.21 einströmende Außenluft wird durch den Stapel der auf Lücke gestapelten Kartons geleitet, so dass ein intensives Durchströmen dieser Lücken erreicht ist. Am Ablagepunkt 5 reicht der Stapel von lose gestapelten Kartons K, d. h. auf Lücke aufgeschichtet, fast bis zur Containerdecke 1.4.

In Fig. 3 ist der Lufteinlass 3.21 geöffnet, so dass durch diesen Luft in den Innenraum gelangen kann. Der Luftauslass 3.11 ist auch geöffnet und durch die eine der beiden Lüftungsleitungen, hier Lüftungsleitung 3.42, mit der saugenden Fördereinrichtung 6 verbunden.
Der Strömungsverlauf ist durch Pfeile und die Richtung der Pfeilspitze in Fig. 3 gekennzeichnet.

Zur Messung der Schadstoffkonzentration in der Lüftungsschleuse 1.1 unter Nutzung einer diesbezüglich üblichen Messeinrichtung, in Fig. 3 nicht dargestellt, können an unterschledlichen Orten(Punkten) der Wandung der Lüftungsschleuse 1.1, d. h. an den Stirn-, Decken- und/oder Längsseiten verschließbare Meßpunkte 8.1 angeordnet sein.

Außerdem kann die Lüftungsschleuse 1.1 in einem anderen Verfahrensschritt, welcher in Fig. 3 nicht dargestellt ist, vollständig verschlossen werden, um beispielsweise deren Inhalt "schwitzen" zu lassen, d. h. Nachgasen zu lassen, um über Messungen u. a. die Schadgas- bzw. - stoffkonzentration der Waren ermitteln zu können.
In diesem Verfahrensschritt sind Lufteinlass 3.12 und Luftauslass 3.11 durch die Lüftungsklappen 14.1 und 14.2 verschlossen.
Dabei ist bevorzugt, dass die Lüftungsschleuse 1.1, d. h. deren Bauteile, luftdicht verschließbar ist. (Alternativ ist es möglich die Lüftungsschleuse 1.1 luftdicht zu umhüllen.)

Der in Fig. 3 dargestellte Aufbau ermöglicht grundsätzlich weitere Betriebsmöglichkeiten, die in Fig. 3 nicht dargestellt sind. Beispielsweise kann die Fördereinrichtung 6 - im Verfahrensschritt "Lüften des Innenraums des Raumes 1" - über die Lüftungsleitung 3.41 betrieben werden, wobei in diesem Fall die Lüftungsleitung 3.42 verschlossen wäre und Außenluft über den Luftauslass 3.11 in den Innenraum strömen würde.

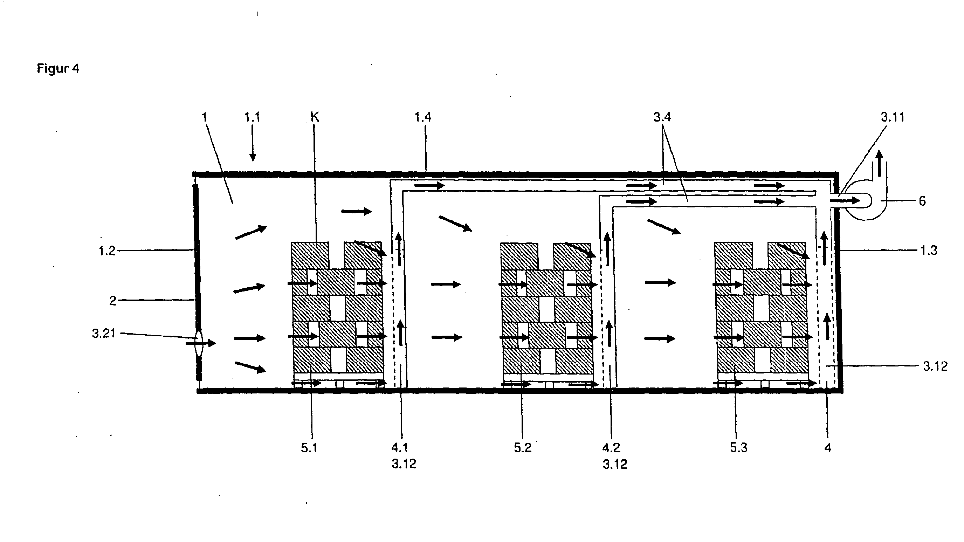

Fig. 4 zeigt eine weitere Ausführungsform einer Lüftungsschleuse 1.1 in einer schematischen Darstellung und in Draufsicht.
Die ortsveränderliche Lüftungsschleuse 1.1 besitzt eine geschlossene Bauweise, so dass ihr Innenraum einen verschließbaren Raum 1 bildet.
Die Lüftungsschleuse 1.1 besitzt in dieser Ausführungsform zwei Entlüftungspunkte 4, davon einen zusätzlichen Entlüftungspunkte 4.1.
Der Entlüftungspunkt 4.1 ist in Fig. 4 in der Nähe der Stirnseite 1.2 und damit der Beladeöffnung 2.1, in Fig. 4 geschlossen dargestellt, angeordnet. Der Entlüftungspunkt 4 ist in der Nähe der Stirnseite 1.3, welche keine Ladeöffnung 2 besitz angeordnet. An einer Längsseite 1.5 ist die Entladeöffnung, in Fig. 4 geöffnet dargestellt, 2.2 angeordnet.
Die beiden Entlüftungspunkte 4 können dabei jeweils als ein perforiertes Luftsammelrohr 3.12 ausgebildet sein, welches am oberen Ende jeweils in den Luftauslass 3.11 mündet, der mit der Fördereinrichtung 6 in üblicher Art und Weise verbunden ist, in Fig. 4 nicht dargestellt.
Die Lüftungsschleuse während des Verfahrensschrittes "Lüften des Innenraums des Raumes 1"

Die Lüftungsschleuse 1.1 ist während des Verfahrensschrittes "Entladen der Waren im Zustand einer ausreichenden Lüftung"dargestellt.

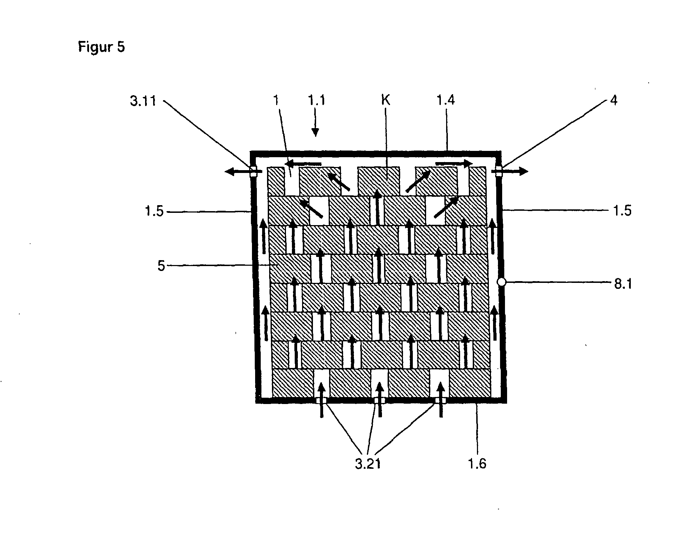

Fig. 5 zeigt eine Lüftungsschleuse 1.1, beladen mit palettierten Kartons. Die auf Paletten stehenden Kartons K, wurden beispielsweise manuell aus einem importcontainer in die Lüftungsschleuse 1.1 umgeladen und dabei vereinzelt, d.h. insbesondere auf Lücke gestellt, so dass ein verbessertes Lüften ermöglicht ist. In Fig. 5 sind sechs Stapel palettierter Kartons K ersichtlich, wobei jeweils ein solcher Stapel an einem der Ablagepunkte 5, die Ablagepunkte 5.1, 5.2, 5.3, 5.4, 5.5 und 5.6 aufgestellt sind.
Zum Verschließen dienen zwei übliche verschließbare Ladeöffnung 2.1 und 2.2, die an den beiden Stirnseiten 1. 2 und 1.3 der kastenförmigen Lüftungsschleuse 1.1 vertikal und in üblicher Art und Weise angeordnet ist. Die Ladeöffnungen 2 sind im geschlossenen Zustand dargestellt. Der Entlüftungspunkt 4 ist in Fig. 5 in der Nähe der Stirnseite 1.3 angeordnet. Der Entlüftungspunkt 4 ist dabei als ein perforiertes Luftsammelrohr 3.12 ausgebildet, welches am oberen Ende in die Fördereinrichtung 6 mündet.

Die Lüftungsschleuse 1.1 entspricht ansonsten grundsätzlich der Ausführung gemäß Fig. 1, wobei zusätzlich Luftleiteinrichtungen 7, eine Signaleinrichtung 9 und ein Verschlussmechanismus 10, welcher durch Messdaten, die durch ein Messgerät zur Konzentrationsmessung und/oder der Messung der Luftwechselrate 8 des entweichenden Luft-Gas-Gemisch ermittelbar sind, in üblicher Art und Weise ansteuerbar ist.
Zwischen diesen sechs Stapeln sind fünf Luftleiteinrichtung 7 angeordnet, welche von der Decke 1.4 bis zur Oberkante der Stapel, so dass das Luft-Gas-Gemisch primär durch die Lücken der Stapel an den Ablagepunkt 5.1, 5.2 5.3, 5.4, 5.5 und 5.6 zum Entlüftungspunkt 4 geleitet wird; nicht primär Im freien Querschnitt, d. h. nicht oberhalb der Stapel.
Der Strömungsverlauf ist durch Pfeile und die Richtung der Pfellspitze in Fig. 5 gekennzeichnet.

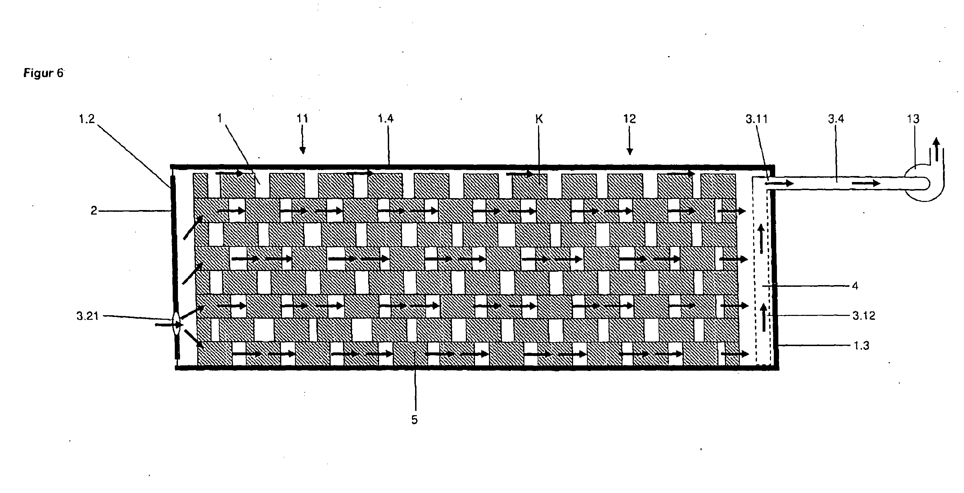

Fig. 6 zeigt eine Lüftungsanlage 11, die zumindest bestehend aus zwei Anlagenteilen, nämlich einer ortsveränderlichen, hier transportablen Lüftungsschleuse 12 als erstem Anlagenteil der Lüftungsanlage 11, und einer Fördereinheit für gasförmige Medien 13 als zweitem Anlagenteil der Lüftungsanlage 11.
Fig. 6 zeigt die Lüftungsanlage 11 während des Verfahrensschrittes "Lüften des Innenraums des Raumes 1".
Die Fördereinhelt für gasförmige Medien 13 als zweiten Anlagenteil der Lüftungsanlage 11, mit zumindest einer Fördereinrichtung 6, hier eine saugende Einheit, beispielsweise einem Radialgebläse, die in Strömungsrichtung hinter dem Entlüftungspunkt 4 des Lüftungscontainers 12 angeordnet und das Luft-Gas-Gemisch aus dem Innenraum des Raumes 1 saugt.
Die Fördereinheit für gasförmige Medien 13 kann transportabel, d. h. insbesondere ortsveränderlich, sein.

Zum Verschließen der kastenförmigen Lüftungsschleuse 12 dienen zwei übliche verschließbare Ladeöffnungen 2, die in Fig. 6 an der Stirnseite 1. 2, dort als Ladeöffnung 2.2, und an der Stirnseite 1.3, dort als Ladeöffnung 2.1, vertikal und in üblicher Art und Weise angeordnet sind. Die Entladeöffnung 2.2 und die Beladeöffnung 2.1 sind jeweils im geschlossenen Zustand dargestellt.
An der Decke 1.4, dort nahe der Stirnseite 1.2, sind ein verschließbarer Lufteinlass 3.21 und nahe der Stirnseite 1. 3 ein Luftauslass 3.11 angeordnet.
Die Fördereinrichtung 6 der Fördereinheit für gasförmige Medien 13 ist wahlweise durch die Lüftungsleitung 3.41 mit dem Lufteinlass 3.21 oder durch die Lüftungsleitung 3.42 mit dem Luftauslass 3.11 verbindbar.
Am Übergang der Lüftungsleitung 3.41 zum Lufteinlass 3.21 ist eine Lüftungsklappe 14.1 angeordnet, die zwei Schaltstellungen besitzt. In der ersten Schaltstellung der Lüftungsklappe 14.1 ist die Luftungsleitung 3.41 verschlossen und der Lufteinlass 3.21 geöffnet und in der zweiten Schaltstellung der Lüftungsklappe 14.1 ist die Lüftungsleitung 3.41 geöffnet und der Lufteinlass 3.21 verschlossen.
Am Übergang der Lüftungsleitung 3.42 zum Luftauslass 3.11 ist eine Lüftungsklappe 14.2 angeordnet, die zwei Schaltstellungen besitzt. In der ersten Schaltstellung der Lüftungsklappe 14.2 ist die Lüftungsleitung 3.42 verschlossen und der Luftauslass 3.11 geöffnet und in der zweiten Schaltstellung der Lüftungsklappe 14.2 ist die Lüftungsleitung 3.42 geöffnet und der Luftauslass 3.11 verschlossen.
Das entweichende Luft-Gas-Gemisch strömt im Innenraum des Raumes 1 primär in Richtung weg von der Ladeöffnung 2.2 hin zum Entlüftungspunkt 4 im Bereich der Stirnseite1.3. Dabei gelangt Außenluft über den Lufteinlass 3.21 in den Innentraum der Lüftungsschleuse 12, vermischt sich mit dem in der Lüftungsschleuse 12 befindlichen Luft-Schadgas-Gemisch, so dass die Konzentration des Schadgases in der Lüftungsschleuse 12 abgesengt wird, und entweicht über den Luftauslass 3.11 aus der Lüftungsschleuse 12. Der Strömungsverlauf ist durch Pfeile und die Richtung der Pfeilspitze in Fig. 6 gekennzeichnet.
In der Lüftungsschleuse 12 sind an den Ablagepunkten 5 die Waren, hier Kartons K, am Boden 5 abgelegt.
Der Entlüftungspunkt 4 kann als ein perforiertes Luftsammelrohr 3.12 ausgebildet sein, welches am oberen Ende in den Luftauslass 3.11 mündet.

Die durch den Lufteinlass 3.21 einströmende Außenluft wird durch den Stapel der auf Lücke gestapelten Kartons geleitet, so dass ein intensives Durchströmen dieser Lücken erreicht ist. Am Ablagepunkt 5 reicht der Stapel von lose gestapelten Kartons K, d. h. auf Lücke aufgeschichtet, fast bis zur Decke 1.4.

In Fig. 6 ist der Lufteinlass 3.21 geöffnet, so dass durch diesen Luft in den Innenraum gelangen kann. Der Luftauslass 3.11 ist auch geöffnet und durch die eine der beiden Lüftungsleitungen, hier Lüftungsleitung 3.42, mit der saugenden Fördereinrichtung 6 verbunden.
Der Strömungsverlauf ist durch Pfeile und die Richtung der Pfeilspitze in Fig. 6 gekennzeichnet. Zur Messung der Schadstoffkonzentration in der Lüftungsschleuse 11 unter Nutzung einer diesbezüglich üblichen Messeinrichtung, in Fig. 6 nicht dargestellt, können an unterschiedlichen Orten(Punkten) der Wandung der Lüftungsschleuse 11, d. h. an den Stirn-, Decken- und/oder Längsseiten verschließbare Meßpunkte 8.1 angeordnet sein.

Außerdem kann die Lüftungsschleuse 12 in einem anderen Verfahrensschritt, welcher in Fig. 6 nicht dargestellt ist, vollständig verschlossen werden, um beispielsweise deren Inhalt "schwitzen" zu lassen, d. h. Nachgasen zu lassen, um über Messungen u. a. die Schadgasbzw. Schadstoffkonzentration der Waren ermitteln zu können.
In diesem Verfahrensschritt sind Lufteinlass 3.21 und Luftauslass 3.11 durch die Lüftungsklappen 14.1 und 14.2 verschlossen.

Der in Fig. 6 dargestellte Aufbau ermöglicht grundsätzlich weitere Betriebsmöglichkeiten, die in Fig. 6 nicht dargestellt sind. Beispielsweise kann die Fördereinrichtung 6 - im Verfahrensschritt "Lüften des Innenraums des Raumes 1" - über die Lüflungsleitung 3.41 betrieben werden, wobei in diesem Fall die Lüftungsleitung 3.42 verschlossen wäre und Außenluft über den Luftauslass 3.11 in den Innenraum strömen würde.

Weitere Gestaltungsmöglichkeiten, die Details der erfindungsgemäßen Lüftungsschleuse betreffen können sind:

### Lufteinlass:

Dabei entspricht der Einlassquerschnitt bevorzugt dem Auslassquerschnitt, um eine höhere Einströmgeschwindigkeit durch den injektoreffekt Bereiche mit geringer Luftströmung zu verhindern. Sind Einlassschlitze in den Sicken der Türen mit hochgezogenen Blechen auf der Innenseite angeordnet, wird eindringendes Regenwasser beim Lüften und Transport verhindert.

### Luftauslass 3.11:

Luftauslass im vorderen Bereich (Breit- oder Stirnseite)
- zurückgesetzter Rohrstutzen an Außenseite: bei Ausfall des inneren Gebläses kann außen ein Ersatzgebläse angeflanscht werden
- Verschlussklappe: Schutz vor Regenwasser, eindringenden Spritzwasser während des Transports und Möglichkeit, Container "schwitzen" zu lassen um über Messungen das Ausgasungspotential der Waren ermitteln zu können
- Ermöglicht eine Filterung und/oder Reinigung des nach außen geleiteten Gas-Luft-Gemisches
- Ermöglicht eine Einleitung oder zumischung des zuvor gefilterten Gas-Luft-Gemisches in den Lufteinlass.

### Gebläse 6:

- Dimenslonierung des Gebläses so, dass auch bei steigendem Strömungswiderstand (z.B. Papier verstopft teil des Ansaugrohres) eine ausreichende Luftförderung gewährleistet ist
- automatische Kontrolle der Drehrichtung, Kontrolle durch Bediener möglich
- wenn erforderlich wird zwischen Gebläse und Auslassstutzen ein Luftfilter mittels Schläuchen geklemmt

### Luftsammelrohr 3.12:

- perforiert (Schutzgitter für Gebläse)
- um Luftansaugung in der Höhe zu verstellen, werden Teile des Ansaugrohrs mit umschlingenden Blenden verdeckt

### Luftleiteinrichtungen 7, deckenseitig:

- da die meisten Waren nicht die gesamte Ladehöhe ausnutzen, werden deckenseitig Luftleiteinrichtungen angebracht. Diese vermindern den Luftstrom über die Ware und leiten den Luftstrom zurück durch die Ware (steigert Effizienz)
- die Luftleiteinrichtungen sind herablassbar und werden mit fortschreitender Beladung positioniert. Sie werden während der Entladung wieder nach oben "geklappt" und stören nicht bei der weiteren Entladung

### Signaleinrichtung 9/Ampel:

- signalisiert Empfänger, wann nach eingeschalteter Lüftung die Containertüren geöffnet werden kann und die Entladung beginnen kann
- rotes und grünes Signallicht an Containertüre
- rotes Licht signalisiert: sicheres Türenöffnen nicht möglich
- grünes Licht: sicheres Türenöffnen möglich
- grün brennt, wenn Gebläse läuft und mindestens die gesamte Containerluft einmal getauscht wurde (Kontrolle über Drehzahlwächter und Zeitschaltuhr)

### Bezugszeichenliste

1 verschließbarer Raum
1.1 Lüftungsschleuse
1.2 Stirnseite
1.3 Stirnseite
1.4 Decke
1.5 Längsseite
2 Ladeöffnung
2.1 Beladeöffnung
2.2 Entladeöffnung
3 Lüftungssystem
3.1 Luftaustrittssystem
3.11 Luftauslass
3.12 Luftsammelrohr
3.2 Lufteintrittssystem
3.21 Lufteinlass
3.3 Lüftungsöffnung
3.4 Lüftungsleitung
4 Entlüftunspunkt
5 Ablagepunkt
6 Fördereinrichtung
7 Luftleiteinrichtungen
8 Messgerät zur Konzentrationsmessung
8.1 Messpunkt (in Wandung)
9 Signaleinrichtung
10 Verschlussmechanismus
11 Lüftungsanlage
12 Lüftungsschleuse (ohne Fördereinheit)
13 Fördereinheit für gasförmige Medien
14 Lüftungsklappe
S Schüttgut
K Karton

## Patentansprüche

1. Verfahren zum Lüften von mit Schadgasen kontaminierten Waren in einem ortsveränderlichen und verschließbaren Raum (1), wobei das Verfahren zumindest folgende Schritte enthält:
- Einbringen der kontaminierten Ware in einen Raum (1) über eine Beladeöffnung (2.1) und Ablegen am Ablagepunkt (5),
- Verschließen der Beladeöffnung (2.1) des Raumes (1),
- Lüften des Innenraums des Raumes (1), wobei eine Fördereinrichtung (6) das im Innenraum des Raumes (1) befindliche Luft-Gas-Gemisch bewegt und dieses Luft-Gas-Gemisch über ein Luftaustrittssystem (3.1) nach außen und Luft über ein Lufteintrittssystem (3.2) in den Innenraum des Raumes (1) geleitet wird,
- Öffnen der Entladeöffnung (2.2) und
- Entladen der Waren, **dadurch gekennzeichnet, dass** ein Messen der Konzentration der Schadgase als Zwischenschritt während des Schrittes Lüften des Innenraums des Raumes (1) und/ oder nach dem Schritt Lüften des Innenraums des Raumes (1) erfolgt und ein Entladen der Waren im Zustand einer ausreichenden Lüftung erfolgt, wobei zumindest das im Innenraum des Raumes (1) befindliche Luft-Gas-Gemisch über zumindest einen Entlüftungspunkt (4) entweicht und das entweichende Luft-Gas-Gemisch primär in einer Richtung weg von der Entladeöffnung (2.2) im Innenraum des Raumes (1) hin zum Entlüftungspunkt (4) strömt.

2. Verfahren nach Anspruch 1, **dadurch gekennzeichnet, dass** der Raum (1) eine transportable Lüftungsschleuse (1.1) ist, wobei deren Grundkörper insbesondere ein DIN-ISO-Container ist.

3. Verfahren nach Anspruch 1, **dadurch gekennzeichnet, dass** bei ausgeschaltetem Lüftungssystem (3) und verschlossenen Lüftungsöffnungen (3.3) des Lufteintrittssystem (3.2) und des Luftaustrittssystem (3.1) ein Entgasen der kontaminierten Ware zum Zwecke der Beobachtung eines Nachgasens erfolgt und eine Messung des Nachgasungsverhaltens erfolgt.

4. Verfahren nach Anspruch 1, **dadurch gekennzeichnet, dass** das Einbringen der kontaminierten Ware in die Lüftungsschleuse (1.1) durch Umladen aus einem Importcontainer und dieses Umladen primär manuell erfolgt.

5. Verfahren nach Anspruch 1, **dadurch gekennzeichnet, dass** die Ablagepunkte (5) der kontaminierten Waren sich im Innenraum zwischen der Entladeöffnung (2) und zumindest einem Entlüftungspunkt (4) befinden.

6. Verfahren nach Anspruch 1, **dadurch gekennzeichnet, dass** das im Innenraum der Lüftungsschleuse (1.1) befindliche Luft-Gas-Gemisch vom Ablagepunkt (5) entfernt wird.

7. Verfahren nach Anspruch 1, **dadurch gekennzeichnet, dass** die Ware in der Lüftungsschleuse (1.1) der Art angeordnet wird, so dass in Abhängigkeit von der Form der Ware oder deren Verpackung eine möglichst große Kontaktfläche mit dem Lüftungsstrom vorhanden ist.

8. Verfahren nach Anspruch 1, **dadurch gekennzeichnet, dass** der verschließbare Raum luftdicht verschließbar ist.

9. Verfahren nach Anspruch 1, **dadurch gekennzeichnet, dass** das über ein Luftaustrittssystem (3.1) nach außen geleitete Luft-Gas-Gemisch in eine Reinigungs- und Filtereinheit eingeleitet wird.

10. Verwendung einer ortsveränderlichen Lüftungsschleuse (1.1) als Warenschleuse, in einer verschließbaren Bauweise, zur Durchführung des Verfahrens gemäß Anspruch 1, zumindest enthaltend,
- zumindest eine verschließbare Beladeöffnung (2.1),
- zumindest eine verschließbare Entladeöffnung (2.2),
- zumindest einen Ablagepunkt (5)
- zumindest einen Entlüftungspunkt (4),
- zumindest ein Lufteintrittsystem (3.2),
- zumindest einen Luftauslass (3.11) und
zumindest eine Fördereinrichtung (6), **dadurch gekennzeichnet, dass** zumindest dieser eine Entlüftungspunkt (4) im Bereich gegenüber der Entladeöffnung (2.2) angeordnet ist und zumindest eine Fördereinrichtung (6) in Strömungsrichtung hinter dem Entlüftungspunkt (4) angeordnet ist und ein Messgerät zur Konzentrationsmessung der Schadgase angeordnet ist.

11. Verwendung der Lüftungsschleuse (1.1), gemäß Anspruch 10, **dadurch gekennzeichnet, dass** weitere Entlüftungspunkte (4), insbesondere im Bereich der Ablagepunkt (5), angeordnet sind.

12. Verwendung der Lüftungsschleuse (1.1), gemäß Anspruch 10, **dadurch gekennzeichnet, dass** die Fördereinrichtung (6) eine saugende Einheit ist und innerhalb und außerhalb des Innenraums der Lüftungsschleuse (1.1) anordenbar ist.

13. Verwendung der Lüftungsschleuse (1.1), gemäß Anspruch 10, **dadurch gekennzeichnet, dass** in der Lüftungsschleuse (1.1) zumindest eine Luftleiteinrichtung (7) angeordnet ist.

14. Verwendung der Lüftungsschleuse (1.1), gemäß Anspruch 10, **dadurch gekennzeichnet, dass** an der Lüftungsschleuse (1.1) eine Signaleinrichtung (9) und/oder ein Verschlussmechanismus (10) angeordnet sind, welche durch Messdaten, die durch ein Messgerät zur Konzentrationsmessung (8) des entweichenden Luft-Gas-Gemisch ermittelt sind, ansteuerbar ist oder sind.

15. Verwendung der Lüftungsschleuse (1.1), gemäß Anspruch 10, **dadurch gekennzeichnet, dass** in der Wandung der Lüftungsschleuse (1.1) zumindest ein Messpunkt (8.1) angeordnet ist, welcher eine Probennahme im Innenraum der Lüftungsschleuse (1.1) ermöglicht.

## Claims

1. Method for aerating goods contaminated with harmful gases in a mobile and sealable chamber (1), said method including at least the following steps:
- inserting the contaminated goods into a chamber (1) through a loading opening (2.1) and placing said goods at the placement point (5),
- sealing the loading opening (2.1) of the chamber (1),
- aerating the interior of the chamber (1), wherein a conveyor (6) moves the air-gas mixture contained in the interior of the chamber (1) in order to discharge said air-gas mixture to the outside through an air outlet system (3.1) and allowing air to flow into the interior of the chamber (1) through an air inlet system (3.2),
- opening the unloading opening (2.2) and
- unloading the goods, **characterized in that** the concentration of harmful gases is measured as an interim step during the step of aerating the interior of the chamber (1) and/or after the step of aerating the interior of the chamber (1), and the goods are unloaded in a status of adequate aeration, wherein at least the air-gas mixture in the interior of chamber (1) escapes through at least one venting point (4) and the escaping air-gas mixture flows primarily in a direction away from the unloading point (2.2) in the interior of the chamber (1) to the venting point (4).

2. A method according to Claim 1, **characterized in that** the chamber (1) is a mobile aeration container (1.1), its base body being in particular a DIN ISO container.

3. A method according to Claim 1, **characterized in that** the polluted goods can degas for the purpose of monitoring whether after-gassing is taking place, and the after-gassing behaviour is being measured, while the aeration system (3) is switched off and the aeration openings (3.3) of the air inlet system (3.2) and air outlet system (3.1) are closed.

4. A method according to Claim 1, **characterized in that** the contaminated goods are first, and primarily by manual handling, trans-shipped from an import container into the aeration container (1.1).

5. A method according to Claim 1, **characterized in that** the placement points (5) of the contaminated goods are located in the interior between the loading opening (2) and at least one venting point (4).

6. A method according to Claim 1, **characterized in that** the air-gas mixture in the interior of the aeration container (1.1) is removed from placement point (5).

7. A method according to Claim 1, **characterized in that** the goods are arranged in the aeration container (1.1) in such a way that depending on the shape of goods or their packing, the area of exposure to the air flow is as large as possible.

8. A method according to Claim 1, **characterized in that** the chamber to be closed is air-tight after closing.

9. A method according to Claim 1, **characterized in that** the air-gas mixture discharged to the outside through the air outlet system (3.1) is directed into a cleaning and filtering unit.

10. The use of a mobile aeration container (1.1) as a goods sluice designed as a sealable construction unit for the conduction of the method according to Claim 1, at least comprising
- at least one sealable loading opening (2.1),
- at least one sealable unloading opening (2.2),
- at least one placement point (5),
- at least one venting point (4),
- at least one air inlet system (3.2),
- at least one air outlet (3.11), and
at least one conveyor (6), **characterized in that** at least that one venting point (4) is located opposite the unloading opening (2.2) and at least one conveyor (6) is located downstream the venting point (4), and a measuring device for measuring the concentration of the harmful gases is located.

11. The use of the aeration container (1.1) according to Claim 10, **characterized in that** there are other venting points (4), in particular those located in the area of the placement point (5).

12. The use of the aeration container (1.1) according to Claim 10, **characterized in that** the conveyor (6) is a suction unit, which can be located inside and outside the interior of the aeration container (1.1).

13. The use of the aeration container (1.1) according to Claim 10, **characterized in that** the aeration container (1.1) has at least one air guide unit (7).

14. The use of the aeration container (1.1) according to Claim 10, **characterized in that** the aeration container (1.1) has a signal device (9) and/or a sealing mechanism (10) which can individually or jointly be controlled by the measuring data recorded in the measuring unit for concentration measuring (8) of the escaping air-gas mixture.

15. The use of the aeration container (1.1) according to Claim 10, **characterized in that** the wall of the aeration container (1.1) has at least one measuring point (8.1) which allows the taking of samples in the interior of the aeration container (1.1).

## Revendications

1. Procédé destiné à ventiler les marchandises contaminées avec des gaz polluants à l'intérieur d'une pièce mobile et pouvant être fermée (1), le procédé contenant au minimum les étapes suivantes :
- apport la marchandise contaminées dans une pièce (1) par l'intermédiaire d'une ouverture de chargement (2.1) et dépôt de la marchandise au point de dépôt (5),
- fermeture de l'ouverture de chargement (2.1) de la pièce (1),
- ventilation de l'intérieur de la pièce (1), un dispositif de transport (6) se chargeant de faire circuler le mélange air-gaz se trouvant à l'intérieur de la pièce (1) ; ce mélange air-gaz étant évacué vers l'extérieur par un système de sortie d'air (3.1) et de l'air frais étant apporté à l'intérieur de la pièce (1) par un système d'entrée d'air (3.2),
- ouverture de l'ouverture de déchargement (2.2) et
- déchargement des marchandises, **caractérisé en ce qu'**une mesure de la concentration des gaz polluants est réalisée en tant qu'étape intermédiaire pendant l'étape Ventiler l'intérieur de la pièce (1) et/ou après l'étape Ventiler l'intérieur de la pièce (1) et qu'un déchargement des marchandises est assuré avec une ventilation suffisante, le mélange air-gaz se trouvant à l'intérieur de la pièce (1) s'échappant par au moins un point de purge (4) et le mélange air-gaz s'échappant circulant principalement dans une direction de l'ouverture de déchargement (2.2) à l'intérieur de la pièce (1) vers le point de purge (4).

2. Procédé suivant la revendication 1, **caractérisé en ce que** la pièce (1) est un sas d'air transportable (1.1), son corps de base étant notamment un conteneur ISO.

3. Procédé suivant la revendication 1, **caractérisé en ce qu'**un dégazage de la marchandise contaminée est réalisé afin d'observer un gazage ultérieur et **en ce qu'**une mesure du comportement de dégazage se produit une fois que le système de ventilation (3) est éteint et que les ouvertures d'aération (3.3) du système d'entrée d'air (3.2) et du système de sortie d'air (3.1) sont fermées.

4. Procédé suivant la revendication 1, **caractérisé en ce que** l'apport de la marchandise contaminée dans le sas d'air transportable (1.1) est réalisée en la transbordant du conteneur d'importation et **en ce que** ce transbordement se produit manuellement.

5. Procédé suivant la revendication 1, **caractérisé en ce que** les points de dépôt (5) des marchandises contaminées se trouvent à l'intérieur de la pièce entre l'ouverture de déchargement (2) et au moins un point de purge (4).

6. Procédé suivant la revendication 1, **caractérisé en ce que** le mélange air-gaz se trouvant à l'intérieur du sas d'air (1.1) est évacué du point de dépôt (5).

7. Procédé suivant la revendication 1, **caractérisé en ce que** la marchandise dans le sas d'air (1.1) est disposée de sorte à obtenir en fonction de la forme de la marchandise ou de son emballage, une surface de contact aussi grande que possible avec le flux d'air.

8. Procédé suivant la revendication 1, **caractérisé en ce que** la pièce pouvant être fermée peut être fermée hermétiquement.

9. Procédé suivant la revendication 1, **caractérisé en ce que** le mélange air-gaz est évacué vers l'extérieur par un système de sortie d'air (3.1) dans une unité de nettoyage et de filtrage.

10. Utilisation du sas d'air mobile (1.1) en tant que sas de marchandises, en variante pouvant être fermée, pour exécuter le procédé suivant la revendication 1, comprenant minimum,
- au moins une ouverture de chargement pouvant être fermée (2.1),
- au moins une ouverture de déchargement pouvant être fermée (2.2),
- au moins un point de dépôt (5),
- au moins un point de purge (4),
- au moins un système d'entrée d'air (3.2),
- au moins une sortie d'air (3.11) et
au moins un dispositif de transport (6), **caractérisé en ce qu'**au moins ce point de purge (4) est disposé dans la zone face à l'ouverture de déchargement (2.2) et en qu'au moins un dispositif de transport (6) est disposé derrière le point de purge (4) dans la direction de circulation et qu'un instrument de mesure est installé pour mesurer la concentration des gaz polluants.

11. Utilisation du sas d'air (1.1), suivant la revendication 10, **caractérisée en ce que** des points de purge (4) supplémentaires sont installés dans la zone des points de dépôt (5).

12. Utilisation du sas d'air (1.1), suivant la revendication 10, **caractérisée en ce que** le dispositif de transport (6) est une unité aspirante qui peut être installée à l'intérieur comme à l'extérieur du sas d'air (1.1).

13. Utilisation du sas d'air (1.1), suivant la revendication 10, **caractérisée en ce qu'**au moins un dispositif de guidage d'air (7) est installé dans le sas d'air (1.1).

14. Utilisation du sas d'air (1.1), suivant la revendication 10, **caractérisée en ce qu'**un dispositif de signalisation (9) et/ou un mécanisme de fermeture (10) est installé sur le sas d'air, ceux-ci pouvant être commandés par les données obtenues par un instrument de mesure mesurant la concentration (8) du mélange air-gaz évacué.

15. Utilisation du sas d'air (1.1), suivant la revendication 10, **caractérisée en ce qu'**au moins un point de mesure (8.1) est présent sur la paroi du sas d'air (1.1), ce point de mesure (8.1) permettant de prélever des échantillons à l'intérieur du sas d'air.
